(19) Europäisches Patentamt
European Patent Office
Office européen des brevets

(11) EP 4 177 076 A1

(12) **EUROPEAN PATENT APPLICATION**
published in accordance with Art. 153(4) EPC

(43) Date of publication:
**10.05.2023 Bulletin 2023/19**

(21) Application number: **21848885.6**

(22) Date of filing: **26.07.2021**

(51) International Patent Classification (IPC):
***B60C 3/04*** (2006.01) ***B60C 1/00*** (2006.01)
***B60C 11/00*** (2006.01) ***C08K 3/36*** (2006.01)
***C08L 9/00*** (2006.01) ***C08L 9/06*** (2006.01)

(52) Cooperative Patent Classification (CPC):
**B60C 1/00; B60C 3/04; B60C 11/00; C08K 3/36; C08L 9/00; C08L 9/06**

(86) International application number:
**PCT/JP2021/027591**

(87) International publication number:
**WO 2022/025008 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2020 JP 2020127571**

(71) Applicant: **Sumitomo Rubber Industries, Ltd.**
**Kobe-shi, Hyogo 651-0072 (JP)**

(72) Inventor: **KAJITA, Hisataka**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) Provided is a pneumatic tire having a favorable balance of wear resistance and slip resistance and, in particular, a high degree of compatibility between wear resistance and slip resistance when traveling in rainy weather. The pneumatic tire comprises at least one rubber layer that forms a tread with a rubber composition containing styrene-butadiene rubber and isoprene-based rubber as a rubber component, and satisfies the following formulas (1) to (4), where R1 (parts by mass) is the quantity of styrene-butadiene rubber and R2 (parts by mass) is the quantity of isoprene-based rubber per 100 parts by mass of the rubber component, and Wt (mm) is the width of the contact patch and Dt (mm) is the diameter of the tire when installed on a standardized rim and inflated to an internal pressure of 250 kPa.

$$(1): R1 + R2 \geq 60 \quad (2): 35 \leq R2 \leq 80 \quad (3): 1963.4 \leq (Dt2 \times \pi / 4) / Wt \leq 2827.4 \quad (4): |R2 - R1| \times Wt \geq 3500$$

EP 4 177 076 A1

## Description

[TECHNICAL FIELD]

The present disclosure relates to a pneumatic tire.

[BACKGROUND ART]

In recent years, from the viewpoint of increasing interest in environmental issues and economic efficiency, there has been a growing demand for fuel efficiency in automobiles, and, regarding pneumatic tires (hereinafter, simply referred to as "tires") installed in automobiles, improvement of fuel efficiency is required.

Conventionally, as a specific means for improving the fuel efficiency of a tire, it was common to form a tread portion using a compound for tires containing a modified synthetic rubber in which a terminal-modified polymer is applied to synthetic rubber, and number of terminals is increased by reducing polymer molecular weight in order to improve the modification effect.

However, in such a tire compounding, the molecular weight of the polymer contained in the compound is low, so that the fracture strength and wear resistance of the product tire may decrease.

Therefore, it has been proposed to compound isoprene-based rubber having excellent fracture strength together with styrene-butadiene rubber (SBR: synthetic rubber) (for example, Patent Documents 1 to 4).

[PRIOR ART DOCUMENTS]

[PATENT DOCUMENTS]

[Patent Document 1] JP 2014-213836 A
[Patent Document 2] JP 2017-52329 A
[Patent Document 3] JP 2018-154181 A
[Patent Document 4] JP 2019-85445 A

[SUMMARY OF INVENTION]

[PROBLEM TO BE SOLVED BY THE INVENTION]

However, even if a small amount of isoprene-based rubber is added to the SBR, the reinforcing filler (for example, silica) is unevenly distributed in the isoprene-based rubber phase, so that the SBR phase is not sufficiently reinforced and the wear resistance may deteriorate.

Further, if isoprene-based rubber is simply added, the SBR ratio in the rubber component is lowered, which may lead to a decrease in grip force on the road surface as a tire and a decrease in slip resistance.

As described above, in the conventional compound design method, there is room for improvement in wear resistance and slip resistance, and in particular, a tire having both slip resistance and wear resistance when running in the rain is strongly required.

Therefore, the present disclosure provides a pneumatic tire in which both wear resistance and slip resistance are improved in a well-balanced manner, and in particular, both wear resistance and slip resistance when running in the rain are highly compatible.

[MEANS FOR SOLVING THE PROBLEM]

The present discloser has diligently studied the solution to the above-mentioned problem, found that the above-mentioned problem can be solved by the disclosure described below, and has completed the present disclosure.

This disclosure is a pneumatic tire, in which

at least one layer of the rubber layers forming the tread portion is formed by the rubber composition containing styrene-butadiene rubber and isoprene-based rubber as a rubber component;
when the amount of the styrene-butadiene rubber is R1 (parts by mass), and the amount of the isoprene-based rubber is R2 (parts by mass) in 100 parts by mass of the rubber component, and the ground contact width of the tire is Wt (mm) and the diameter is Dt (mm) when the tire is installed on a standardized rim and the internal pressure

is 250 kPa, the following (formula 1) to (formula 4) are satisfied.

$$R1 + R2 \geqq 60 \cdots\cdots\cdots \text{(formula 1)}$$

$$35 \leqq R2 \leqq 80 \cdots\cdots\cdots \text{(formula 2)}$$

$$1963.4 \leqq (Dt^2 \times \pi/4) / Wt \leqq 2827.4 \cdots \text{(formula 3)}$$

$$|R2\text{-}R1| \times Wt \geqq 3500 \cdots\cdots\cdots \text{(formula 4)}$$

[EFFECT OF THE INVENTION]

According to the present disclosure, it is possible to provide a pneumatic tire in which both wear resistance and slip resistance are improved in a well-balanced manner, and in particular, wear resistance and slip resistance when running in the rain are highly compatible.

[EMBODIMENTS FOR CARRYING OUT THE INVENTION]

Hereinafter, the present disclosure will be specifically described based on the embodiments.

[1] Features of the tires disclosed in this disclosure

First, the characteristics of the tire according to the present disclosure will be described.
In order to solve the above problems, that is, to provide a pneumatic tire in which both wear resistance and slip resistance are improved in a well-balanced manner, and in particular, wear resistance and slip resistance when running in the rain are highly compatible, the present discloser has considered that the conventional technique of controlling the physical properties of rubber by compounding is not sufficient, and it is necessary to study the shape of the tire. As a result of various experiments and studies, the present discloser has completed this disclosure.
Specifically, in the tire according to the present disclosure, at least one layer of a rubber layers forming a tread portion is formed by a rubber composition containing styrene-butadiene rubber (SBR rubber) and isoprene-based rubber as a rubber component.
When the amount of SBR rubber is R1 (parts by mass) and the amount of isoprene-based rubber is R2 (parts by mass), the following (formula 1) and (formula 2) are satisfied.

$$R1 + R2 \geqq 60 \cdots\cdots\cdots \text{(formula 1)}$$

$$35 \leqq R2 \leqq 80 \cdots\cdots\cdots \text{(formula 2)}$$

The tire according to the present disclosure further satisfy the following (formula 3) and (formula 4) when installed on a standardized rim, and the contact width of the tire is Wt (mm) and the diameter is Dt (mm) when the internal pressure is 250 kPa.

$$1963.4 \leqq (Dt^2 \times \pi/4) / Wt \leqq 2827.4 \cdots \text{(formula 3)}$$

$$|R2\text{-}R1| \times Wt \geqq 3500 \cdots\cdots\cdots \text{(formula 4)}$$

By having the above characteristics, both wear resistance and slip resistance are improved in a well-balanced manner, and in particular, a tire in which both wear resistance and slip resistance when running in the rain are highly compatible can be provided.
When the tread portion is formed of a plurality of rubber layers such as a cap rubber layer forming the outermost

surface of the tread portion and a base rubber layer forming the inside of the tread portion, it is preferable that this rubber composition is used for the cap rubber layer. Further, an additional rubber layer may be provided between the cap rubber layer and the base rubber layer to form a tread portion having three or more layers.

In the tire according to the present disclosure, the mechanism in which wear resistance and slip resistance when running in the rain are highly compatible is presumed as follows.

As described above, the isoprene-based rubber is excellent in fracture strength, and therefore, when applied as a rubber component of a rubber composition forming a tread portion, it is considered to be effective in improving the wear resistance of a tire.

However, when the tread portion is formed of a rubber composition containing only isoprene-based rubber as the rubber component, it is not possible to secure sufficient grip on a wet road surface, so that, if step on the accelerator with the handle turned when a left turn or a right turn is made when running in the rain, tire slippage may occur and the vehicle body may slip. In addition, the occurrence of this slip may lead to deterioration of wear resistance.

Therefore, in the present disclosure, SBR rubber having higher heat generation than isoprene-based rubber and excellent grip is used as a rubber component together with isoprene-based rubber; and the total amount of the isoprene-based rubber and SBR rubber in 100 parts by mass of the rubber component is 60 parts by mass or more (formula 1), and the amount of isoprene-based rubber is 35 parts by mass or more and 80 parts by mass or less (formula 2).

As a result, it is possible to improve the wear resistance and the slip resistance in a well-balanced manner, and it is possible to increase the heat generation while preventing the rubber from losing the followability due to the uneven distribution of the reinforcing filler. Therefore, it is possible to achieve a high degree of compatibility of wear resistance and slip resistance when driving on a wet road surface during the rain.

The total amount of the above-mentioned isoprene-based rubber and SBR rubber is more preferably 75 parts by mass or more and 85 parts by mass or less, and the amount of isoprene-based rubber is more preferably 55 parts by mass or more and 65 parts by mass or less.

Further, when running in the rain, slippage occurs between the tread portion and the road surface, so that the frequency of deformation applied to the tread rubber becomes high, and the followability to the road surface tends to be lost.

Therefore, in the present disclosure, the contact width Wt (mm) and the diameter Dt (mm) satisfy $1963.4 \leqq (Dt^2 \times \pi/4) / Wt \leqq 2827.4$ (formula 3), when the tire is installed on a standardized rim and the internal pressure is 250 kPa.

$(Dt^2 \times \pi/4) / Wt$ in (formula 3) is more preferably 1963.5 or more, further preferably 2018 or more, further preferably 2137 or more, further preferably 2143 or more, further preferably 2153 or more, further preferably 2155 or more, further preferably 2174 or more, further preferably 2187 or more, further preferably 2467 or more, further preferably 2474 or more, further preferably 2483 or more, further preferably 2485 or more, further preferably 2492 or more, and further preferably 2501 or more.

Above (formula 3) indicates that the area from the lateral direction of the tire $[(Dt/2)^2 \times \pi) = (Dt^2 \times \pi/4)]$ with respect to the contact width Wt of the tire is larger than the conventional tire. As a result, the frequency of deformation applied to the tread rubber can be made lower than before, and the tread rubber can be made easier to follow the road surface. And, since the heat generation in the SBR rubber phase effectively exerts the property as a grip force with the road surface and reduce the frequency of contact with the road surface even in normal driving, it is possible to prevent the occurrence of slip when driving in the rain and improve the wear resistance.

In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "DesignRim" described in "YEAR BOOK ". In the case of tires that are not specified in the standard, it refers a rim that can be assembled and can maintain internal pressure, that is, the rim that does not cause air leakage from between the rim and the tire, and has the smallest rim diameter, and then the narrowest rim width.

In the above description, the "ground contact width Wt" refers to the maximum linear distance in the tire axial direction on the contact surface with the flat plate, when the tire is installed on the "standardized rim", an air pressure of 250 kPa is filled, the tire is placed stationary on a flat plate in a vertical position, and the "standardized load" is applied.

Here, the ground contact width Wt (mm) is preferably 153 mm or more, more preferably 154 mm or more, further preferably 155 mm or more, further preferably 156 mm or more, and further preferably 173 mm or more. On the other hand, the upper limit is not particularly limited, but is preferably 275 mm or less, more preferably 245 mm or less, and further preferably 215 mm or less.

The diameter Dt (mm) is preferably 691 mm or more, more preferably 692 mm or more, further preferably 693 mm or more, further preferably 694 mm or more, further preferably 695 mm or more, further preferably 698 mm or more, further preferably 699 mm or more, further preferably 700 mm or more, and further preferably 701 mm or more.

Here, the "standardized load" is the load defined for each tire in the standard in the standard system including the standard on which the tire is based, and refers to the maximum mass that can be loaded on the tire. In the case of

JATMA, it is the maximum load capacity; in the case of TRA, it is the maximum value described in the table "TIRE LOAD LIMITS AT VARIOUS COLD INFLATION PRESSURES"; and in the case of ETRTO, it is "LOAD CAPACTY".

Further, in the rubber component containing the isoprene-based rubber and the SBR rubber, when the difference in the compounding amounts of the isoprene-based rubber and the SBR rubber becomes small, the isoprene-based rubber phase and the SBR rubber phase form a co-continuous phase, it is considered that it is easy to hinder the movement of phases each other. In particular, for tires with a small total width (small ground contact width), the grip force decreases when the steering angle is set. So, by further increasing the difference in the compounding amounts of isoprene-based rubber and SBR rubber to create a sea-island structure, it is considered that the mobility can be enhanced, so that slipping in rainy weather can be prevented and the wear resistance can be improved.

As a result of experiments and studies based on this idea, it was found that the "difference in the compounding amounts of isoprene-based rubber and SBR rubber" and the "ground contact width" should satisfy $|R2-R1| \times Wt \geqq 3500$ (formula 4).

The above-mentioned $|R2-R1| \times Wt$ is more preferably 6120 or more, further preferably 6160 or more, further preferably 6200 or more, further preferably 6240 or more, and further preferably 6920 or more, further preferably 6960 or more, further preferably 7000 or more, further preferably 7040 or more, and further preferably 7080 or more. The upper limit is not particularly limited, but is preferably 10,000 or less.

As a result of further experiments and studies, it was found that, when the complex elastic modulus E*(MPa) of the rubber composition measured under the conditions of 30°C, frequency 10 Hz, initial strain 5%, and dynamic strain ratio 1%, and the ground contact width Wt (mm) satisfy the following formula, it can further contribute to slip prevention and improvement of wear resistance in rainy weather.

$$E^* \times Wt \leqq 2000$$

The measurement of E* is performed on the rubber cut out from the radial outside of at least the groove bottom of the tire, preferably from the radial outside of the half depth of the deepest circumferential groove. Then, specifically, the measurement can be performed using, for example, a viscoelasticity measuring device of "Eplexor (registered trademark)" manufactured by GABO.

Here, E*(MPa) is preferably 7.5 MPa or more, more preferably 8.0 MPa or more, further preferably 8.5 MPa or more, and still more preferably 9.0 MPa or more. The upper limit is not particularly limited, but is preferably 15.0 MPa or less. Further, $E^* \times Wt$ is preferably 1575 or less, more preferably 1557 or less, further preferably 1479 or less, further preferably 1416 or less, further preferably 1404 or less, further preferably 1386 or less, further preferably 1326 or less is further preferable, further preferably 1320 or less, and further preferably 1300.5 or less. On the other hand, the lower limit is not particularly limited, but is preferably 1000 or more.

[2] SBR of the present disclosure

Hereinafter, the present disclosure will be specifically described b ased on the embodiments.

1. Rubber composition forming the tread portion

In the present embodiment, the rubber composition of the rubber layer forming at least one layer of the tread portion (hereinafter, also s imply referred to as "rubber composition" ) can be obtained from the r ubber component described below and other compounding materials.

(a) Rubber component

In the present embodiment, as shown in (formula 1), styrene but adiene rubber and isoprene-based rubber are contained in an amount of 60 parts by mass or more, preferably 75 parts by mass or more and 85 parts by mass or less in 100 parts by mass of the rubber component. As shown in (formula 2), the isoprene-based rubber is contained in an a mount of 35 parts by mass or more and 80 parts by mass or less, prefe rably 55 parts by mass or more and 65 parts by mass or less.

(a-1) Isoprene-based rubber

Examples of the isoprene-based rubber include natural rubber (N R), isoprene rubber (IR), reformed NR, modified NR, and modified IR. Among them, NR is preferably used.

As the specific NR, for example, SIR20, RSS # 3, TSR20 and the like, which are commonly used in the tire

industry, can be used. The IR is not particularly limited, and for example, IR 2200 or the like, whi ch is commonly used in the tire industry, can be used. Reformed NR in cludes deproteinized natural rubber (DPNR), high-purity natural rubber ( UPNR), etc., and modified NR includes epoxidized natural rubber (ENR), hydrogenated natural rubber (HNR), grafted natural rubber, etc. Examp les of the modified IR include epoxidized isoprene rubber, hydrogenated i soprene rubber, and grafted isoprene rubber. These may be used alone or in combination of two or more.

(a-2) Styrene butadiene rubber (SBR)

As the styrene-butadiene rubber, SBR having a weight average molecular weight of, for example, 100,000 or more and 2 million or less is preferably used. As a result, the strength against strain and stress of the SBR phase can be improved, so that the fracture strength of the tire can be further improved.

The styrene content (hereinafter, also referred to as "styrene amount" ) in the SBR used in the present embodiment is preferably 5% by mass or more and 25% by mass or less. The styrene content in the rubber composition is preferably 1% by mass or more and 5% by mass or less. As a result, the aggregation of styrenes in the rubber composition can be suppressed, so that the followability of the tread can be improved. The amount of vinyl bond (1,2-bonded butadiene unit amount) in the butadiene portion of SBR is preferably 40% by mass or less. Then, the structure identification of SBR (measurement of the amount of styrene and the amount of vinyl bond) can be performed using, for example, an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR, but when the modified S-SBR is used, the dispersibility is improved, and further improvement in wear resistance and slip resistance is expected. Therefore, it is preferable.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain terminal modified SBR having the above functional group to the main chain and having at least one end modified with the above modifying agent, and
end-modified SBR which is modified (coupled) with a polyfunctional compound having two or more epoxy groups in the molecule, and into which an epoxy group or hydroxyl group has been introduced,

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

Further, as the modified SBR, for example, an SBR modified with a compound (modifying agent) represented by the following formula can be used.

[Chemical 1]

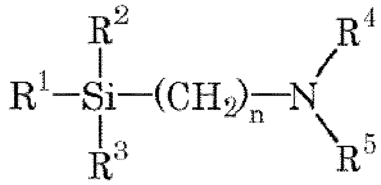

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.

As the modified SBR modified by the compound (modifying agent) represented by the above formula, SBR, in

which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable, n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as
N-methyl -ε-caprolactam, N-phenyl-ε-caprolactum, N-methyl-ω-laurilolactum, N-vinyl-ω-laurilolactum, N-methyl-6-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., JSR Corporation, Asahi Kasei Co., Ltd., Zeon Co., Ltd., Versalis Co., Ltd., etc. can be used. The SBR may be used alone or in combination of two or more. When two or more types of SBR are used in combination, the weight average of each SBR is used for the above-mentioned styrene amount, vinyl bond amount and the like.

(a-3) Butadiene rubber

The rubber composition may further contain butadiene rubber (BR) as a rubber component, and when BR is contained, the content of BR in 100 parts by mass of the rubber component is, for example, 40 parts by mass or less, preferably 20 parts by mass or less. The weight average molecular weight of BR is, for example, 100,000 or more and 2 million or less. The vinyl bond amount of BR is, for example, 1% by mass or more and 30% by mass or less. The cis content of BR is, for example, 1% by mass or more and 98% by mass or less. The trans content of BR is, for example, 1% by mass or more and 60% by mass or less.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Kosan Co., Ltd., JSR Corporation, Asahi Kasei Co., Ltd., and Nippon Zeon Co., Ltd., etc. can be used.

(a-4) Other rubber components

Further, as another rubber component, rubber (polymer) generally used in the production of tires such as nitrile rubber (NBR) may be contained.

(b) Compounding materials other than rubber components

(b-1) Silica

The rubber composition preferably contains silica as a reinforcing filler. The content of the rubber component with respect to 100 parts by mass is preferably 60 parts by mass or more, and more preferably 80 parts by mass or more. The upper limit is not particularly limited as long as the rubber composition can be kneaded, but is preferably about 200 parts by mass, for example. As a result, silica is dispersed throughout the rubber system without being unevenly distributed in either NR or SBR, so that wear resistance and slip resistance can be further improved.

As the silica, silica having a BET specific surface area of 180 $m^2/g$ or more and 300 $m^2/g$ or less can be preferably used. As a result, the reinforcing property of silica can be further enhanced, so that particularly the wear resistance is improved. The BET specific surface area is the value of the nitrogen adsorption specific surface area ($N_2SA$) measured by the BET method according to ASTM D3037-93.

Specific examples of silica include dry silica (anhydrous silica) and wet silica (hydrous silica). Of these, wet silica is preferable because it has a large number of silanol groups, and products of Evonik, Degussa, Rhodia, Tosoh Silica Co., Ltd., Solbay Japan Co., Ltd., and Tokuyama Co., Ltd., etc. can be used.

(b-2) Silane coupling agent

The rubber composition preferably contains a silane coupling agent together with silica. The silane coupling agent is not particularly limited. Examples of the silane coupling agent include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;

glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

The preferable content of the silane coupling agent is, for example, 10% by mass or more, 15% by mass or less, and more preferably 11 parts by mass or more with respect to 100 parts by mass of silica. As a specific silane coupling agent, for example, products of Degussa, Momentive, Shinetsu Silicone Co., Ltd., Tokyo Chemical Industry Co., Ltd., Azumax Co., Ltd., Toray Dow Corning Co., Ltd., etc. can be used.

(b-3) Carbon black

The rubber composition preferably contains carbon black. The content of carbon black is, for example, 1 part by mass or more and 200 parts by mass or less with respect to 100 parts by mass of the rubber component.
The carbon black is not particularly limited, and examples thereof includes furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; and channel black (channel carbon black) such as EPC, MPC and CC. These may be used alone or in combination of two or more.
Nitrogen adsorption specific surface area ($N_2SA$) of carbon black is, for example, 30 $m^2/g$ or more and 250 $m^2/g$ or less. The amount of dibutyl phthalate (DBP) absorbed by carbon black is, for example, 50 ml/100 g or more and 250 ml/100 g or less. The nitrogen adsorption specific surface area of carbon black is measured according to ASTM D4820-93, and the amount of DBP absorbed is measured according to ASTM D2414-93.
The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(b-4) Plasticizer component

The rubber composition may contain a plasticizer component such as oil or a thermoplastic resin (resin). The preferable content of the plasticizer component is, for example, 5 parts by mass or more and 40 parts by mass or less, more preferably 8 parts by mass or more and 35 parts by mass or less, and further preferably15 parts by mass or more and 25 parts by mass or less with respect to 100 parts by mass of the rubber component. As a result, since the cohesive power between the silicas is weakened and the dispersibility is improved, when the rubber composition is kneaded, the followability of the tread to the road surface is improved, and the wear resistance and the slip resistance can be further improved. The oil content also includes the amount of oil contained in rubber (oil spread rubber).
Examples of the oil include process oils, vegetable oils and fats, and mixtures thereof. As the process oil, for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more.
As the specific examples of oil, products of Idemitsu Kosan Co., Ltd., Sankyo Yuka Kogyo Co., Ltd., Japan Energy Co., Ltd., Orisoi Co., Ltd., H & R Co., Ltd., Toyokuni Seiyu Co., Ltd., Showa Shell Sekiyu Co., Ltd., and Fuji Kosan Co., Ltd. can be used.
Examples of the plasticizing agent component of the thermoplastic resin (resin) include C5 resin, C5-C9 resin, C9 resin, terpene resin, terpene-aromatic compound resin, rosin resin, and dicyclopentadiene resin (DCPD resin), and alkylphenol-based resin.
The "C5 based petroleum resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.
The "C9-based petroleum resin" (aromatic petroleum resin) refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples of the aromatic petroleum resin, for example, a coumaron indene resin, a coumaron resin, an indene resin, and an aromatic vinyl resin are preferably used. As the aromatic vinyl resin, a homopolymer of a -methylstyrene or styrene or a copolymer of α -methylstyrene and styrene is preferable because it is economical, easy to process, and excellent in heat generation. A copolymer of α -methylstyrene and styrene is more preferred. As the aromatic vinyl-based resin, for example, those

commercially available from Clayton, Eastman Chemical, etc. can be used.

The "C5-C9-based petroleum resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 petroleum resin, for example, those commercially available from Tosoh Corporation, LUHUA, etc. can be used.

Examples of the terpene-based resin and the terpene-aromatic compound-based resin include polyterpenes, terpenephenols, and aromatic-modified terpene resins. Polyterpene includes a resin obtained by polymerizing a terpene compound and a hydrogenated additive thereof. Terpene compound includes a hydrocarbon having a composition of (C5H8)n and an oxygen - containing derivative thereof. Terpene compound is a compound having a terpene as a basic skeleton, which include $\alpha$ -pinene, $\beta$ - pinene, dipentene, limonene, milsen, aloosimene, osimene, $\alpha$ -phellandrene, $\alpha$ -terpinene, $\gamma$ -terpinene, terpinolene, 1,8-cineol, 1,4-cineol, $\alpha$ -terpineol, $\beta$ -terpineol, $\gamma$ -terpineol and the like.

Examples of the polyterpene include terpene resins, such as $\alpha$ - pinene resin, $\beta$ -pinene resin, limonene resin, dipentene resin, and $\beta$ - pinene/limonene resin, which are made from the above-mentioned terpene compound, as well as hydrogenating terpene resins obtained by hydrogenating the terpene resin. Examples of the terpene phenol include a resin obtained by copolymerizing the above-mentioned terpene compound and the phenol-based compound, and a resin obtained by hydrogenating the resin. Specifically, a resin obtained by condensing the above-mentioned terpene compound, a phenol-based compound and formalin can be mentioned. Examples of the phenolic compound include phenol, bisphenol A, cresol, xylenol and the like. Examples of the aromatic-modified terpene resin include a resin obtained by modifying a terpene resin with an aromatic compound, and a resin obtained by hydrogenating the resin. The aromatic compound is not particularly limited as long as it has an aromatic ring, and for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; coumaron, indene and the like can be mentioned.

As the commercially available terpene resin, for example, a product of Yasuhara Chemical Co., Ltd. can be used. It may be used alone or in combination of two or more.

The rosin-based resin is not particularly limited, and examples thereof include natural resin rosin, and rosin-modified resin obtained by modifying it by hydrogenation, disproportionation, dimerization, esterification, or the like.

The alkylphenol-based resin is not particularly limited, and examples thereof include an alkylphenol formaldehyde resin, an alkylphenol acetylene resin, and an oil-modified phenol formaldehyde resin.

(b-5) Anti-aging agent

The rubber composition preferably contains an anti-aging agent. Content of the anti-aging agent is, for example, 1 part by mass or more and 10 parts by mass or less, and more preferably 2.5 parts by mass or more with respect to 100 parts by mass of the rubber component.

Examples of the antiaging agent include naphthylamine-based antiaging agents such as phenyl-$\alpha$-naphthylamine; diphenylamine-based antiaging agents such as octylated diphenylamine and 4,4'-bis ($\alpha$, $\alpha$'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol;

bis, tris, polyphenolic anti-aging agents such as tetrakis-[methylene-3- (3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-6) Stearic acid

The rubber composition may contain stearic acid. Content of stearic acid is, for example, 0.5 parts by mass or more and 10.0 parts by mass or less, and more preferably 2 parts by mass or more, with respect to 100 parts by mass of the rubber component. As the stearic acid, conventionally known ones can be used, and, for example, products of NOF Corporation, NOF Corporation, Kao Corporation, Fuji film Wako Pure Chemical Industries, Ltd., and Chiba Fatty Acid Co., Ltd., etc. can be used.

(b-7) Zinc oxide

The rubber composition may contain zinc oxide. Content of zinc oxide is, for example, 0.5 parts by mass or

more and 10 parts by mass or less, and more preferably 1.5 parts by mass or more, with respect to 100 parts by mass of the rubber component. As the zinc oxide, conventionally known ones can be used, for example, products of Mitsui Metal Mining Co., Ltd., Toho Zinc Co., Ltd., Hakusui Tech Co., Ltd., Shodo Chemical Industry Co., Ltd., Sakai Chemical Industry Co., Ltd., etc. can be used.

(b-8) Crosslinking agent and vulcanization accelerator

The rubber composition preferably contains a cross-linking agent such as sulfur. Content of the cross-linking agent is, for example, 0.1 part by mass or more and 10.0 parts by mass or less, and more preferably 2 parts by mass or more, with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryo Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys, and KA9188 (1,6-bis (N, N'-dibenzylthiocarbamoyldithio) hexane) manufactured by Lanxess; and organic peroxides such as dicumyl peroxide.

The rubber composition preferably contains a vulcanization accelerator. Content of the vulcanization accelerator is, for example, 0.3 parts by mass or more and 10.0 parts by mass or less, and more preferably 1 part by mass or more, with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-9) Other

In addition to the above components, the rubber composition may further contain additives generally used in the tire industry, for example, fillers such as organic peroxides, graphite, calcium carbonate, talc, alumina, clay, aluminum hydroxide, and mica. Content of these additives is, for example, 0.1 part by mass or more and 200 parts by mass or less with respect to 100 parts by mass of the rubber component.

2 Production of tread rubber composition

The rubber composition is produced by a general method, for example, a manufacturing method including a base kneading step of kneading a rubber component with a filler such as silica or carbon black, and a finish kneading step of kneading the kneaded product obtained in the base kneading step and a cross-linking agent.

The kneading can be performed using a known (sealed) kneader such as a banbury mixer, a kneader, or an open roll.

The kneading temperature of the base kneading step is, for example, higher than 50 °C or higher and 200 °C or lower, and the kneading time is, for example, 30 seconds or more and 30 minutes or less. In the base kneading process, in addition to the above components, compounding agents conventionally used in the rubber industry, such as softeners such as oil, stearic acid, zinc oxide, antiaging agents, waxes, and vulcanization accelerators, may be appropriately added and kneaded as needed.

In the finish kneading step, the kneaded product obtained in the base kneading step and the cross-linking agent are kneaded. The kneading temperature of the finish kneading step is, for example, room temperature or higher and 80 °C or lower, and the kneading time is, for example, 1 minute or more and 15 minutes or less. In the finish kneading step, in addition to the above components, a vulcanization accelerator, zinc oxide and the like may be appropriately added

and kneaded as needed.

3. Tire manufacturing

The tire of the present discloser is manufactured by a usual method using an unvulcanized rubber composition obtained through the finish kneading step. That is, the unvulcanized rubber composition is extruded according to the shape of each tire member of the tread, and is molded together with other tire members by a normal method on a tire molding machine to produce an unvulcanized tire.

Specifically, on the molded drum, the inner liner as a member to ensure the airtightness of the tire, the carcass as a member to withstand the load, impact, and filling air pressure received by the tire, a belt as a member to strongly tighten the carcass to increase the rigidity of the tread, and the like are wound, both ends of the carcass are fixed to both side edges, a bead part as a member for fixing the tire to the rim is arranged, and formed into a toroid shape. Then the tread is pasted on the center of the outer circumference, and the sidewall portion as a member that protects the carcass and withstands bending is pasted on the radial outer side to produce an unvulcanized tire.

In the present embodiment, it is preferable to provide with an inclined belt layer that extends at an angle of 55 ° or more and 75 ° or less with respect to the tire circumferential direction, as the belt. As a result, the durability of the tire is ensured while the rigidity of the tread can be sufficiently maintained.

Then, the produced unvulcanized tire is heated and pressed in a vulcanizer to obtain a tire. The vulcanization step can be carried out by applying a known vulcanization means. The vulcanization temperature is, for example, 120 °C or higher and 200 °C or lower, and the vulcanization time is, for example, 5 minutes or more and 15 minutes or less.

At this time, the tire is formed into a shape that satisfies the above-mentioned (formula 3) and (formula 4).

Specific tires that can satisfy the above-mentioned (formula 3) and (formula 4) include 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.

In this embodiment,
the tire satisfying the above-mentioned (formula 1) to (formula 4) is preferably applied to a pneumatic tire for a passenger car, and by satisfying the above formula, it is possible to contribute more preferably to the solution of the problem in the present disclosure, that is, to provide a tire in which both wear resistance and slip resistance are improved in a well-balanced manner, and in particular, both wear resistance and slip resistance when running in the rain are highly compatible.

The pneumatic tire for a passenger car referred to here is a tire mounted on a vehicle traveling on four wheels and has a maximum load capacity of 1000 kg or less.

The maximum load capacity is not particularly limited as long as it is 1000 kg or less. However, in general, the tire weight tends to increase as the maximum load capacity increases, and the braking distance also increases due to inertia accordingly. Therefore, the maximum load capacity is preferably 900 kg or less, more preferably 800 kg or less, and further preferably 700 kg or less.

From the viewpoint of the braking distance due to the inertia described above, the tire weight is preferably 20 kg or less, more preferably 15 kg or less, and further preferably 12 kg or less, 10 kg or less, and 8 kg or less. The tire of the present disclosure may be provided with electronic components, and in this case, the tire weight referred to here is the weight of the tire including the weights of the electronic components and the electronic component mounting members. If a sealant, sponge or the like is provided in the lumen, the weight of the tire includes them.

[EXAMPLES]

Hereinafter, the present disclosure will be described in more detail with reference to examples.

1. Manufacture of rubber compositions for treads

First, a rubber composition for tread was produced.

(1) Compounding material
First, each compounding material shown below was prepared.

(a) Rubber component

(a-1) NR: TSR20
(a-2-1) SBR-A: T3830 (Toughden 3830) manufactured by Asahi Kasei Corporation. (Amount of styrene: 35% by mass)

(a-2-2) SBR-B: Nipol NS616 manufactured by Nippon Zeon Corporation (Modified S-SBR, amount of styrene: 20% by mass)
(a-3) BR: BR150 manufactured by Ube Kosan Co., Ltd.

(b) Compounding materials other than rubber components

(b-1) Carbon black: Diablack N220 manufactured by Mitsubishi Chemical Corporation
(b-2-1) Silica-A: Ultrasil VN3 manufactured by Evonik Industries, Inc. (BET specific surface area: 140 $m^2/g$)
(b-2-2) Silica-B: Ultrasil 9000 Gr manufactured by Evonik Industries, Inc. (BET specific surface area: 210 $m^2/g$)
(b-3) Silane coupling agent: Si266 manufactured by Degussa (Bis(3-triethoxysilylpropyl) disulfide)
(b-4) Oil: Process X-140 manufactured by Japan Energy Co., Ltd.
(b-5-1) Resin-A: Petrotac 100V manufactured by Tosoh Corporation (C5 resin)
(b-5-2) Resin-B: YS Polystar U130 manufactured by Yasuhara Chemical Co., Ltd. (Terpen-aromatic compound resin)
(b-6) Zinc oxide: Zinc white No. 1 manufactured by Mitsui Mining & Smelting Co., Ltd.
(b-7) Stearic acid: Stearic acid "TSUBAKI" manufactured by NOF CORPORATION
(b-8) Anti-aging agent: Antigen 6C manufactured by Sumitomo Chemical Co., Ltd. (N- (1,3-dimethylbutyl) -N'-phenyl-p-phenylenediamine)
(b-9) Crosslinking agent and vulcanization accelerator

Sulfur: Powdered sulfur manufactured by Tsurumi Chemical Industry Co., Ltd.
Vulcanization accelerator: Nocceler CZ manufactured by Ouchi Shinko Chemical Industry Co., Ltd. (N-Cyclohexyl-2-benzothiazolyl sulphenamide)

(2) Production of rubber composition
According to the compounding contents of A-1 to A-6 and B-1 to B-9 shown in Table 1, using a Banbury mixer, materials other than sulfur and a vulcanization accelerator were kneaded for 5 minutes under the condition of 150 °C to obtain a kneaded product. Each compounding amount is a mass part.

[Table 1]

| Formulation | A-1 | A-2 | A-3 | A-4 | A-5 | A-6 | B-1 | B-2 | B-3 | B-4 | B-5 | B-6 | B-7 | B-8 | B-9 |
|---|---|---|---|---|---|---|---|---|---|---|---|---|---|---|---|
| (Rubber component) | | | | | | | | | | | | | | | |
| NR | 60 | 60 | 60 | 60 | 60 | 60 | 35 | 90 | 50 | 35 | 35 | 35 | 35 | 35 | 35 |
| SBR-A | 20 | 0 | 0 | 0 | 0 | 0 | 10 | 10 | 40 | 0 | 0 | 0 | 0 | 0 | 0 |
| SBR-B | 0 | 20 | 20 | 20 | 20 | 20 | 0 | 0 | 0 | 10 | 10 | 10 | 10 | 10 | 10 |
| BR | 20 | 20 | 20 | 20 | 20 | 20 | 55 | 0 | 10 | 55 | 55 | 55 | 55 | 55 | 55 |
| (NR+SBR) | 80 | 80 | 80 | 80 | 80 | 80 | 45 | 100 | 90 | 45 | 45 | 45 | 45 | 45 | 45 |
| [Other Compounding Materials] | | | | | | | | | | | | | | | |
| Carbon Black | 5 | 5 | 5 | 5 | 5 | 5 | 5 | 5 | 5 | 5 | 5 | 5 | 5 | 5 | 5 |
| Silica-A | 55 | 55 | 55 | 80 | 0 | 0 | 55 | 55 | 55 | 55 | 55 | 80 | 0 | 0 | 0 |
| Silica-B | 0 | 0 | 0 | 0 | 80 | 80 | 0 | 0 | 0 | 0 | 0 | 0 | 80 | 80 | 80 |
| Silane coupling agent | 5.5 | 5.5 | 5.5 | 8.8 | 8.8 | 8.8 | 5.5 | 5.5 | 5.5 | 5.5 | 5.5 | 8.8 | 8.8 | 8.8 | 8.8 |
| Oil | 0 | 0 | 10 | 10 | 10 | 10 | 0 | 0 | 0 | 0 | 10 | 10 | 10 | 10 | 10 |
| Resin-A | 0 | 0 | 0 | 0 | 0 | 10 | 0 | 0 | 0 | 0 | 0 | 0 | 0 | 10 | 0 |
| Resin-B | 0 | 0 | 0 | 0 | 0 | 0 | 0 | 0 | 0 | 0 | 0 | 0 | 0 | 0 | 10 |
| Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Stearic acid | 2 | 2 | 2 | 2 | 2 | 2 | 2 | 2 | 2 | 2 | 2 | 2 | 2 | 2 | 2 |
| Anti-aging agents | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |

(continued)

| [Crosslinking agent and vulcanization accelerator] | | | | | | | | | | | | | | | |
|---|---|---|---|---|---|---|---|---|---|---|---|---|---|---|---|
| Sulfur | 2 | 2 | 2 | 2 | 2 | 2 | 2 | 2 | 2 | 2 | 2 | 2 | 2 | 2 | 2 |
| Vulcanization accelerator | 1 | 1 | 1 | 1 | 1 | 1 | 1 | 1 | 1 | 1 | 1 | 1 | 1 | 1 | 1 |

2. Tire manufacturing

Next, sulfur and a vulcanization accelerator were added to the obtained kneaded product, and the mixture was kneaded at 80 °C for 5 minutes using an open roll to obtain a tread rubber composition. A tread is formed using the obtained tread rubber composition, bonded together with other tire members to form an unvulcanized tire, which is then vulcanized for 10 minutes under the condition of 170°C to produce each test tire having the size of 155 type(Table 2), or 175 type (Table 3). For each test tire, the contact width Wt (mm), diameter Dt (mm), and the complex elastic modulus E* (MPa) measured under the condition of 30°C, frequency 10 Hz, initial strain 5%,and the dynamic strain rate 1% using "Eplexor" manufactured by GABO are shown in Tables 2 to 3.

3. Performance evaluation test

(1) Slip resistance

After each test tire is installed on all wheels of the vehicle (domestic FF vehicle, displacement 2000cc) and is filled with air at 250kPa, a steady circular turn on the test course on a wet road surface was made while gradually increasing the vehicle speed, and the maximum speed until the driver felt the slip of the car body was measured. The evaluation was performed by calculating the average value of the measurement results by the five drivers for each test tire and then indexing the average value against a reference test tire. The larger the value, the better the slip resistance when running in the rain. The results are also shown in Tables 2 to 3.

(2) Wear resistance

Each test tire is installed on all wheels of the vehicle (domestic FF vehicle, displacement 2000cc) and is filled with air at 250kPa. Then, after driving 8000km at a speed of 80km/h on a test course on a wet road surface, the depth of the groove near the equator of the tire was measured, and the rate of decrease with respect to the depth before the test was determined. The evaluation was performed by indexing by the following formula based on the ratio of the result in the reference test tire and the result in each test tire. The larger the value, the better the wear resistance. The results are also shown in Tables 2 to 3.

$$\text{Wear resistance} = [(\text{reduction rate of reference test tire}/\text{reduction rate of the test tire})] \times 100$$

(3) Evaluation result

Table 2 shows the evaluation results for the size 155 type, and Table 3 shows the evaluation results for the size 175 type. As the reference test tires, the test tires of Example 1-1 are used in Table 2, and the test tires of Example 2-1 are used in Table 3. The balance between the slip resistance and the wear resistance can be evaluated by taking the average value of the evaluation results of the slip resistance (1) and the wear resistance (2).

[Table 2]

| | Example | | | | | | Comparative example | | | | | | | | | |
|---|---|---|---|---|---|---|---|---|---|---|---|---|---|---|---|---|
| | 1-1 | 1-2 | 1-3 | 1-4 | 1-5 | 1-6 | 1-1 | 1-2 | 1-3 | 1-4 | 1-5 | 1-6 | 1-7 | 1-8 | 1-9 | 1-10 |
| Formulation | A-1 | A-2 | A-3 | A-4 | A-5 | A-6 | B-1 | B-2 | A-1 | B-3 | B-4 | B-5 | B-6 | B-7 | B-8 | B-9 |
| Size(155/) | 70R19 | | | | | | 70R19 | | 60R17 | 70R19 | | | | | | |
| Dt mm | 699 | 700 | 700 | 698 | 701 | 698 | 699 | 701 | 618 | 702 | 700 | 699 | 698 | 699 | 700 | 701 |
| Wt mm | 154 | 156 | 155 | 154 | 156 | 153 | 155 | 154 | 154 | 153 | 155 | 155 | 156 | 154 | 155 | 156 |
| NR+SBR | 80 | 80 | 80 | 80 | 80 | 80 | 45 | 100 | 80 | 90 | 45 | 45 | 45 | 45 | 45 | 46 |
| NR | 60 | 60 | 60 | 60 | 60 | 60 | 35 | 90 | 60 | 60 | 35 | 35 | 35 | 35 | 35 | 35 |
| E*(MPa) | 9.0 | 8.5 | 7.5 | 8.0 | 9.0 | 8.5 | 7.0 | 8.0 | 9.0 | 10 | 7.0 | 6.5 | 7.0 | 8.0 | 7.0 | 7.0 |
| $(Dt^2 \times \pi/4)/Wt$ | 2492 | 2467 | 2483 | 2485 | 2474 | 2501 | 2476 | 2506 | 1947 | 2530 | 2480 | 2476 | 2453 | 2492 | 2480 | 2474 |
| $\lvert NR-SSBR \rvert \times Wt$ | 6160 | 6240 | 6200 | 6160 | 6240 | 6120 | 3875 | 12320 | 6160 | 1530 | 3875 | 3875 | 3900 | 3850 | 3875 | 3900 |
| $E^* \times Wt$ | 1386 | 1326 | 1162.5 | 1232 | 1404 | 1300.5 | 1085 | 1232 | 1386 | 1530 | 1085 | 1007.5 | 1092 | 1232 | 1085 | 1092 |
| Slip resistance | 100 | 105 | 105 | 105 | 105 | 108 | 90 | 90 | 95 | 90 | 90 | 90 | 90 | 90 | 93 | 93 |
| Wear resistance | 100 | 105 | 107 | 110 | 113 | 115 | 90 | 95 | 95 | 90 | 90 | 92 | 95 | 98 | 100 | 105 |

[Table 3]

| | Example | | | | | | Comparative example | | | | | | | | | |
|---|---|---|---|---|---|---|---|---|---|---|---|---|---|---|---|---|
| | 2-1 | 2-2 | 2-3 | 2-4 | 2-5 | 2-6 | 2-1 | 2-2 | 2-3 | 2-4 | 2-5 | 2-6 | 2-7 | 2-8 | 2-9 | 2-10 |
| Formulation | A-1 | A-2 | A-3 | A-4 | A-5 | A-6 | B-1 | B-2 | A-1 | B-3 | B-4 | B-5 | B-6 | B-7 | B-8 | B-9 |
| Size(175/) | 60R19 | | | | | | 60R19 | | 55R18 | 60R19 | | | | | | |
| Dt mm | 693 | 694 | 692 | 695 | 694 | 691 | 692 | 693 | 650 | 695 | 692 | 693 | 694 | 691 | 692 | 693 |
| Wt mm | 175 | 174 | 176 | 177 | 173 | 174 | 176 | 176 | 176 | 174 | 176 | 176 | 176 | 174 | 175 | 176 |
| NR+SBR | 80 | 80 | 80 | 80 | 80 | 80 | 45 | 100 | 80 | 90 | 45 | 45 | 45 | 45 | 45 | 46 |
| NR | 60 | 60 | 60 | 60 | 60 | 60 | 35 | 90 | 60 | 60 | 35 | 35 | 35 | 35 | 35 | 35 |
| E*(MPa) | 9.0 | 8.5 | 7.5 | 8.0 | 9.0 | 8.5 | 7.0 | 8.0 | 9.0 | 10 | 7.0 | 6.5 | 7.0 | 8.0 | 7.0 | 7.0 |
| $(Dt^2 \times \pi/4)/Wt$ | 2153 | 2174 | 2137 | 2143 | 2187 | 2155 | 2137 | 2143 | 1896 | 2180 | 2149 | 2155 | 2149 | 2155 | 2149 | 2143 |
| $\|NR-SBR\| \times Wt$ | 7000 | 6960 | 7040 | 7080 | 6920 | 6960 | 4400 | 14080 | 7000 | 1740 | 4375 | 4375 | 4400 | 4350 | 4375 | 4400 |
| $E^* \times Wt$ | 1575 | 1479 | 1320 | 1416 | 1557 | 1479 | 1232 | 1408 | 1575 | 1740 | 1225 | 1137.5 | 1232 | 1392 | 1225 | 1232 |
| Slip resistance | 100 | 107 | 107 | 107 | 107 | 112 | 89 | 89 | 93 | 89 | 88 | 89 | 88 | 88 | 90 | 91 |
| Wear resistance | 100 | 107 | 109 | 112 | 115 | 119 | 88 | 93 | 93 | 88 | 89 | 90 | 92 | 97 | 98 | 102 |

From Tables 2 to 3, it can be seen that, for tires of any size, 155 size and 175 size, if all of the above (formula 1) to (formula 4) are satisfied, it is possible to provide a tire in which wear resistance and slip resistance are highly compatible when driving in the rain.
Then, it can be seen that, by satisfying each of the requirements specified in claim 2 and thereafter, it is possible to provide a tire in which wear resistance and slip resistance are more highly compatible when driving in the rain.
On the other hand, when any one of (formula 1) to (formula 4) is not satisfied, it can be seen that the wear resistance and the slip resistance cannot be said to be highly compatible when driving in the rain.
Although the present disclosure has been described above based on the embodiments, the present disclosure is not limited to the above embodiments. Various modifications can be made to the above embodiments within the same and equal scope as the present disclosure.
The present disclosure (1) is a pneumatic tire, in which

at least one layer of the rubber layers forming the tread portion is formed by the rubber composition containing styrene-butadiene rubber and isoprene-based rubber as a rubber component;
when the amount of the styrene-butadiene rubber is R1 (parts by mass), and the amount of the isoprene-based rubber is R2 (parts by mass) in 100 parts by mass of the rubber component, and the ground contact width of the tire is Wt (mm) and the diameter is Dt (mm) when the tire is installed on a standardized rim and the internal pressure is 250 kPa, the following (formula 1) to (formula 4) are satisfied.

$$R1 + R2 \geqq 60 \cdots\cdots\cdots\cdots\cdots \text{(formula 1)}$$

$$35 \leqq R2 \leqq 80 \cdots\cdots\cdots\cdots\cdots \text{(formula 2)}$$

$$1963.4 \leqq (Dt^2 \times \pi/4) / Wt \leqq 2827.4 \cdots\cdots \text{(formula 3)}$$

$$|R2-R1| \times Wt \geqq 3500 \cdots\cdots\cdots\cdots \text{(formula 4)}$$

The present disclosure (2) is the pneumatic tire according to the present disclosure (1), wherein the weight average molecular weight of the styrene-butadiene rubber is 100,000 or more and 2 million or less.
The present disclosure (3) is the pneumatic tire according to the present disclosure (1) or (2), wherein the styrene-butadiene rubber is a modified solution-polymerized styrene-butadiene rubber.
The present disclosure (4) is the pneumatic tire of any combination of the present disclosures (1) to (3), wherein the styrene content in the styrene-butadiene rubber is 5% by mass or more and 25% by mass or less.
The present disclosure (5) is the pneumatic tire of any combination of the present disclosures (1) to (4), wherein the styrene content in the rubber composition is 1% by mass or more and 5% by mass or less.
The present disclosure (6) is the pneumatic tire of any combination of the present disclosures (1) to (5), wherein the rubber composition further contains 40 parts by mass or less of butadiene rubber in 100 parts by mass of the rubber component.
The present disclosure (7) is the pneumatic tire of any combination of the present disclosures (1) to (6), wherein the rubber composition contains 5 parts by mass or more and 40 parts by mass or less of a plasticizer component with respect to 100 parts by mass of the rubber component.
The present disclosure (8) is the pneumatic tire according to the present disclosure (7), wherein a thermoplastic resin is contained as the plasticizer component.
The present disclosure (9) is the pneumatic tire according to the present disclosure (8), wherein the thermoplastic resin is selected from the group consisting of C5 resin, C5-C9 resin, C9 resin, terpene resin, terpene-aromatic compound resin, rosin resin, dicyclopentadiene resin, and alkylphenol based resin.
The present disclosure (10) is the pneumatic tire of any combination of the present disclosures (1) to (9), wherein the rubber composition contains 60 parts by mass or more of silica with respect to 100 parts by mass of the rubber component.
The present disclosure (11) is the pneumatic tire according to the present disclosure (10), wherein the BET specific surface area of the silica is 180 $m^2/g$ or more and 300 $m^2/g$ or less.
The present disclosure (12) is the pneumatic tire according to the present disclosure (10) or (11), which contains 10% by mass or more and 15% by mass or less of a silane coupling agent with respect to 100 parts by mass of the silica
The present disclosure (13) is the pneumatic tire of any combination of the present disclosures (1) to (12),

wherein, when the complex elastic modulus of the rubber composition measured under the conditions of 30°C, frequency 10Hz, initial strain 5%, and dynamic strain rate 1% is E*(MPa), the following formula is satisfied.

$$E^* \times Wt \leqq 2000$$

The present disclosure (14) is the pneumatic tire of any combination of the present disclosures (1) to (13), wherein, the tread portion is formed of a plurality of rubber layers, and the rubber composition is used for the cap rubber layer of the tread.

The present disclosure (15) is the pneumatic tire of any combination of the present disclosures (1) to (14), which is a pneumatic tire for a passenger car.

## Claims

1. A pneumatic tire, in which

   at least one layer of the rubber layers forming the tread portion is formed by the rubber composition containing styrene-butadiene rubber and isoprene-based rubber as a rubber component;
   when the amount of the styrene-butadiene rubber is R1 (parts by mass), and the amount of the isoprene-based rubber is R2 (parts by mass) in 100 parts by mass of the rubber component, and the ground contact width of the tire is Wt (mm) and the diameter is Dt (mm) when the tire is installed on a standardized rim and the internal pressure is 250 kPa, the following (formula 1) to (formula 4) are satisfied.

$$R1 + R2 \geqq 60 \cdots\cdots\cdots\cdots\cdots\cdots \text{(formula 1)}$$

$$35 \leqq R2 \leqq 80 \cdots\cdots\cdots\cdots\cdots\cdots \text{(formula 2)}$$

$$1963.4 \leqq (Dt^2 \times \pi/4) / Wt \leqq 2827.4 \cdots\cdots \text{(formula 3)}$$

$$|R2\text{-}R1| \times Wt \geqq 3500 \cdots\cdots\cdots\cdots \text{(formula 4)}$$

2. The pneumatic tire according to claim 1, wherein the weight average molecular weight of the styrene-butadiene rubber is 100,000 or more and 2 million or less.

3. The pneumatic tire according to claim 1 or 2, wherein the styrene-butadiene rubber is a modified solution-polymerized styrene-butadiene rubber.

4. The pneumatic tire according to any one of claims 1 to 3, wherein the styrene content in the styrene-butadiene rubber is 5% by mass or more and 25% by mass or less.

5. The pneumatic tire according to any one of claims 1 to 4, wherein the styrene content in the rubber composition is 1% by mass or more and 5% by mass or less.

6. The pneumatic tire according to any one of claims 1 to 5, wherein the rubber composition further contains 40 parts by mass or less of butadiene rubber in 100 parts by mass of the rubber component.

7. The pneumatic tire according to any one of claims 1 to 6, wherein the rubber composition contains 5 parts by mass or more and 40 parts by mass or less of a plasticizer component with respect to 100 parts by mass of the rubber component.

8. The pneumatic tire according to claim 7, wherein a thermoplastic resin is contained as the plasticizer component.

9. The pneumatic tire according to claim 8, wherein the thermoplastic resin is selected from the group consisting of

C5 resin, C5-C9 resin, C9 resin, terpene resin, terpene-aromatic compound resin, rosin resin, dicyclopentadiene resin, and alkylphenol based resin.

**10.** The pneumatic tire according to any one of claims 1 to 9, wherein the rubber composition contains 60 parts by mass or more of silica with respect to 100 parts by mass of the rubber component.

**11.** The pneumatic tire according to claim 10, wherein the BET specific surface area of the silica is 180 $m^2/g$ or more and 300 $m^2/g$ or less.

**12.** The pneumatic tire according to claim 10 or 11, which contains 10% by mass or more and 15% by mass or less of a silane coupling agent with respect to 100 parts by mass of the silica

**13.** The pneumatic tire according to any one of claims 1 to 12, wherein, when the complex elastic modulus of the rubber composition measured under the conditions of 30°C, frequency 10Hz, initial strain 5%, and dynamic strain rate 1% is E*(MPa), the following formula is satisfied.

$$E^* \times Wt \leqq 2000$$

**14.** The pneumatic tire according to any one of claims 1 to 13, wherein, the tread portion is formed of a plurality of rubber layers, and the rubber composition is used for the cap rubber layer of the tread.

**15.** The pneumatic tire according to any one of claims 1 to 14, which is a pneumatic tire for a passenger car.

## INTERNATIONAL SEARCH REPORT

International application No.
**PCT/JP2021/027591**

**A. CLASSIFICATION OF SUBJECT MATTER**

***B60C 3/04***(2006.01)i; ***B60C 1/00***(2006.01)i; ***B60C 11/00***(2006.01)i; ***C08K 3/36***(2006.01)i; ***C08L 9/00***(2006.01)i; ***C08L 9/06***(2006.01)i
FI: B60C3/04 B; B60C1/00 A; B60C11/00 D; C08K3/36; C08L9/00; C08L9/06

According to International Patent Classification (IPC) or to both national classification and IPC

**B. FIELDS SEARCHED**

Minimum documentation searched (classification system followed by classification symbols)

B60C1/00; C08L9/00; C08L9/06; C08K3/36; B60C3/04; B60C11/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-206194 A (BRIDGESTONE CORP.) 24 November 2017 (2017-11-24) claims 1, 2, paragraphs [0038]-[0048], [0058], [0085]-[0089], [0137], example 1, table 1 | 1-5, 7-12, 14, 15 |
| Y | | 6-9, 13 |
| A | JP 2017-14365 A (KURARAY CO.) 19 January 2017 (2017-01-19) paragraph [0072] | 2, 4 |
| X | JP 2020-59808 A (BRIDGESTONE CORP.) 16 April 2020 (2020-04-16) claim 1, paragraphs [0135], [0140], [0143], [0144], examples 1-5, tables 1, 2 | 1-3, 5, 6, 10-12, 14 |
| Y | | 7-9, 13 |
| A | | 4, 15 |
| Y | JP 2018-95733 A (TOYO TIRE & RUBBER CO.) 21 June 2018 (2018-06-21) examples, table 1 | 6 |
| Y | JP 2019-196436 A (SUMITOMO RUBBER IND.) 14 November 2019 (2019-11-14) examples, table 1 | 6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2021/027591

C. DOCUMENTS CONSIDERED TO BE RELEVANT

| Category* | Citation of document, with indication, where appropriate, of the relevant passages | Relevant to claim No. |
|---|---|---|
| Y | JP 2019-137281 A (YOKOHAMA RUBBER CO., LTD.) 22 August 2019 (2019-08-22) examples, table 1 | 6 |
| Y | WO 2012/141158 A1 (SUMITOMO RUBBER INDUSTRIES, LTD.) 18 October 2012 (2012-10-18) paragraph [0042], examples, table 1 | 13 |
| Y | JP 2011-213988 A (SUMITOMO RUBBER INDUSTRIES, LTD.) 27 October 2011 (2011-10-27) paragraph [0061], examples, table 1 | 13 |
| Y | JP 2010-95705 A (SUMITOMO RUBBER INDUSTRIES, LTD.) 30 April 2010 (2010-04-30) paragraph [0066], examples, table 1 | 13 |
| E, X | JP 2021-138343 A (SUMITOMO RUBBER INDUSTRIES, LTD.) 16 September 2021 (2021-09-16) claims, paragraphs [0127]-[0130], examples, table 1 | 1-12, 14, 15 |
| P, X | JP 2020-186350 A (SUMITOMO RUBBER IND.) 19 November 2020 (2020-11-19) claims, paragraphs [0030]-[0049], [0069]-[0071], [0073], [0074], [0080]-[0090], [0161], examples, tables 1-3 | 1-12, 14 |

Form PCT/ISA/210 (second sheet) (January 2015)

**INTERNATIONAL SEARCH REPORT**
**Information on patent family members**

International application No.
**PCT/JP2021/027591**

| Patent document cited in search report | Publication date (day/month/year) | Patent family member(s) | Publication date (day/month/year) |
|---|---|---|---|
| JP 2017-206194 A | 24 November 2017 | (Family: none) | |
| JP 2017-14365 A | 19 January 2017 | (Family: none) | |
| JP 2020-59808 A | 16 April 2020 | (Family: none) | |
| JP 2018-95733 A | 21 June 2018 | US 2018/0346694 A1<br>examples, tables 2, 7<br>WO 2017/104135 A1<br>CN 108473721 A | |
| JP 2019-196436 A | 14 November 2019 | (Family: none) | |
| JP 2019-137281 A | 22 August 2019 | (Family: none) | |
| WO 2012/141158 A1 | 18 October 2012 | US 2014/0027029 A1<br>paragraph [0052], examples, table 1<br>EP 2698262 A1<br>CN 103459169 A | |
| JP 2011-213988 A | 27 October 2011 | US 2011/0230593 A1<br>paragraph [0093], examples, table 1<br>EP 2366557 A1<br>CN 102199316 A<br>KR 10-2011-0104429 A | |
| JP 2010-95705 A | 30 April 2010 | US 2010/0071827 A1<br>paragraph [0097], examples, table 1<br>EP 2165855 A1<br>CN 101676323 A<br>KR 10-2010-0033337 A | |
| JP 2021-138343 A | 16 September 2021 | (Family: none) | |
| JP 2020-186350 A | 19 November 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014213836 A
- JP 2017052329 A
- JP 2018154181 A
- JP 2019085445 A
- JP 2010111753 A